# EUROPEAN PATENT SPECIFICATION

(11) **EP 2 388 690 B1**
(45) Date of publication and mention of the grant of the patent: **21.02.2018**
(21) Application number: 10196994.7
(22) Date of filing: 24.12.2010
(51) Int. Cl.: G05B 23/02, G06F 9/44

(54) **Method and apparatus for displaying batch execution data of an industrial plant**
Verfahren und Vorrichtung zum Anzeigen von Chargenausführungsdaten einer Industrieanlage
Procédé et appareil d'affichage de données d'exécution en lots d'une installation industrielle

(30) Priority: 21.05.2010 US 785022
(43) Date of publication of application: 23.11.2011
(73) Proprietor: Yokogawa Electric Corporation, Musashino-shi Tokyo 180-8750 (JP)
(72) Inventor: Takahashi, Hirofumi, 469270 Singapore (SG); Yamamoto, Mitsuhiro, Tokyo 180-8750 (JP)
(74) Representative: Henkel, Breuer & Partner

(56) References cited:
- US-A1- 2007 165 031

## Description

### Technical Field

The present invention relates to a method and apparatus for displaying batch execution data of an industrial plant. It particularly relates to displaying batch execution data obtained during batch procedural control.

### Background

As defined in ANSI/ISA-88.01-1995, Batch Control, Part 1: Models and Terminology, a batch process is "a process that leads to the production of finite quantities of material by subjecting quantities of input materials to an ordered set of processing activities over a finite period of time using one or more pieces of equipment." In batch manufacturing plants, each ordered set of processing activities is typically referred to as a batch execution. In most batch processes, no two batch executions are exactly alike. Each batch execution will have a set of unique characteristics include production quality, cost, and speed.

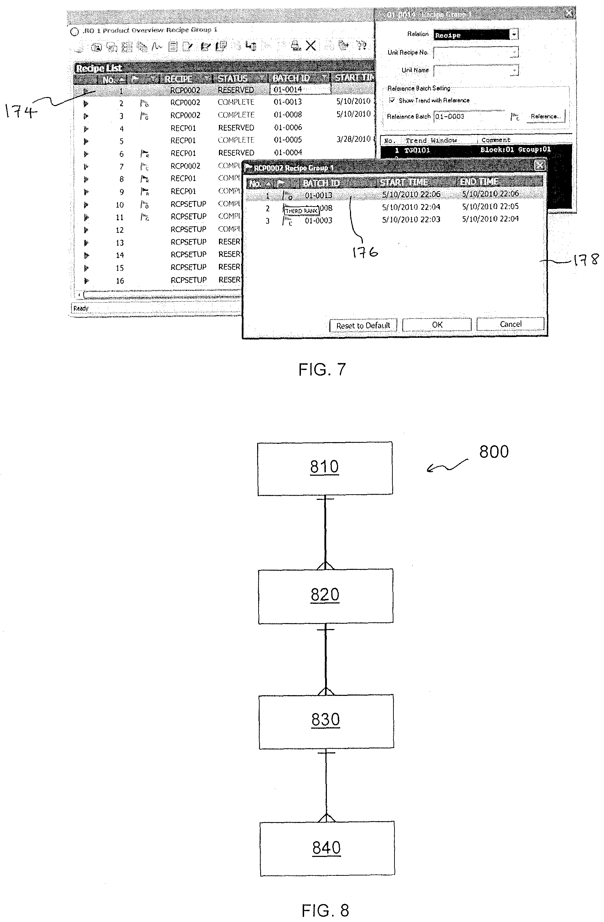

In procedural control for batch processes, as also defined in "ANSI/ISA-88.01-1995, Batch Control, Part 1: Models and Terminology," there are typically four levels in a hierarchy 800 of levels of procedural elements 810, 820, 830, 840, as shown in FIG. 8. Level elements in the four levels of procedural control are commonly referred to as "Procedures" 810, "Unit Procedures" 820, "Operations" 830 and "Phases" 840 respectively, as further defined in "ANSI/ISA-88.01-1995, Batch Control, Part 1: Models and Terminology." Accordingly, a first level of batch processes comprises at least one first level element 810 or Procedure 810. Each first level element 810 may comprise at least one second level element 820 or Unit Procedure 820. Each second level element 820 may comprise at least one third level element 830 or Operation 830. Finally, each third level element 830 may comprise at least one fourth level element 840 or Phase 840.

In a batch manufacturing plant, a number of batch executions are usually monitored at once. Some of the batch executions may be completed while others are uncompleted or reserved pending performance. Each of the batch executions is typically a first level element or procedure 810 under procedural control as described above. All the batch executions or first level elements 810 are normally displayed as a list of first level elements 810 in a first window on a display screen. If a user wishes to check on the unit procedures or second level elements 820 for a particular batch execution 810, the user clicks on that particular batch execution 810. This will open a second window on top of the first window, showing all the unit procedures 820 for that batch execution 810. To check on a few batch executions 810 at once, a corresponding number of new windows need to be opened on the screen. To go further down the levels to check on operations 830 and phases 840 for a number of batch executions 810, even more new windows need to be opened on top of each other on the same screen. The screen is quickly cluttered, earlier-opened windows become obscured, and it becomes confusing for users to know which window is showing which level element 820, 830, 840 for which batch execution 810.

Furthermore, it is common in batch manufacturing plants for trend data to be collected during performance of each batch execution so that a trend data set is collected from each completed batch execution. In this way, production characteristics of each completed batch execution of the industrial plant may be recorded for future use.

Users of a batch management function in a control system of a batch manufacturing plant often want to remember specific completed batch executions that had particularly good characteristics. This is important as the users can then try to replicate those specific completed batch executions when performing subsequent batch executions in order to achieve similar good characteristics. Currently, particularly good completed batch executions are recorded by manually writing down their batch execution reference numbers in a log book or on a white board in a control room. Remarks are frequently written down beside each reference number to describe the specific characteristics that made that particular batch execution worth noting. Besides good batch executions, users may also record poorly completed batch executions to serve as negative examples. Looking for a specific recorded completed batch execution is therefore a tedious process as users need to pore over all the recorded batch executions in order to find a specific one.

An uncompleted batch execution may be a batch execution that is reserved and pending performance, or may be a batch execution that is being performed but has not yet been completed. When an uncompleted batch execution is being performed, for a specific completed batch execution to serve as a reference for the uncompleted batch execution, trend data that has been collected from the completed batch execution should be shown as a reference trend together with current trend data of the uncompleted batch execution. In this way, a user can see how well the uncompleted batch execution is matching the completed batch execution or how far any deviations may be.

Currently, to display a reference trend while monitoring an uncompleted batch execution, a user opens a window in the batch management function to look for a specific completed batch execution reference number among a plurality of stored completed batch execution reference numbers. The user knows the specific reference number that is being sought by having previously looked it up in the log book or white board containing the list of manually recorded completed batch execution reference numbers. When the specific reference number is found, the user selects it and the trend data set corresponding to this specific completed batch execution is then displayed as a reference trend together with the display of the current trend data.

US 2007/0165031 discloses graphic elements and graphic displays, which are provided for use in a process environment to display information to one or more users about the process environment, such as the current state of devices within a process plant. The graphic elements and displays include one or more objects, each of which includes a visualization, which depicts an entity within the process environment, a property associated with the depicted process entity and a routine that operates in conjunction with the visualization and the property to cause a change in the-visualization based on a change in the property, or to cause a change in the process environment based on user input through the visualization.; In this manner, the graphic objects can be used to create displays that graphically illustrate, through animations and other visual operations, the changing state of the process or detected events within the process. These same graphic elements may be used to enable users to interact with a visualization on a user interface screen, such as through a mouse or a keyboard device, to cause a change in the object property, which may then provide an input to a device within the process plant.

### Summary

According to the present invention the above object is achieved by the combination of features of claims 1 or 7. The dependent claims are directed to different advantageous aspects of the invention.

The method of the invention may further comprise selecting another first level element displayed in the first level window; and displaying in another second level window second level elements comprised by the another first level element, the another second level window being displayed within the first level window directly beneath the another first level element without obscuring any other first level element in the first level window.

The method may further comprise selecting a second level element in the second level window and displaying in a third level window third level elements comprised by the selected second level element, the third level window being displayed within the second level window directly beneath the selected second level element without obscuring any other second level element in the second level window.

The method may further comprise selecting another second level element in the second level window; and displaying in another third level window third level elements comprised by the another second level element, the another third level window being displayed within the second level window directly beneath the another second level element without obscuring any other second level element in the second level window.

The method may further comprise displaying the selected first level element in a topmost row of first level elements in the first level window when displaying the second level window.

The method may further comprise displaying a particular level element as a marked level element, the marked level element being a procedural element at which the batch execution is currently transitioning.

The method may further comprise flagging at least one completed batch execution among a plurality of completed batch executions. The flagging may comprise selecting a flag from a group of flags, each of the flags denoting a distinct batch execution characteristic.

The method may further comprise associating a reference trend with an uncompleted batch execution, the reference trend being a trend data set collected from a completed batch execution; and selectably displaying the reference trend together with displaying the current trend data of the uncompleted batch execution.

Associating the reference trend with the uncompleted batch execution may comprise selecting a particular flagged completed batch execution. The method may further comprise displaying a plurality of flagged completed batch executions for selection of the particular flagged completed batch execution therefrom.

The method may further comprise selecting a second trend data set as a second reference trend and displaying the second reference trend together with displaying the current trend data.

According to a second exemplary aspect, there is provided an apparatus for displaying batch execution data of an industrial plant configured for performing a plurality of batch executions, each batch execution comprising a hierarchy of levels of elements, each level comprising at least one level element. The apparatus comprises a window display module configured for displaying at least one second level window within a first level window such that upon selection of a first level element in the first level window, a corresponding second level window is displayed within the first level window directly beneath its corresponding first level element without obscuring any other first level element in the first level window, each second level window displaying second level elements comprised by its corresponding first level element.

The window display module may be further configured to display the selected first level element in a topmost row of first level elements in the first level window when the second level window is displayed.

The window display module may be further configured for displaying at least one third level window within a second level window, such that upon selection of second level element in the second level window, a corresponding third level window is displayed within the second level window directly beneath its corresponding second level element without obscuring any other second level element in the second level window, each third level window displaying third level elements comprised by its corresponding second level element

The window display module may further be configured to display a particular level element as a marked level element, the marked level element being a procedural element at which the batch execution is currently transitioning.

The apparatus may further comprise a flag module configured for flagging at least one completed batch execution among a plurality of completed batch executions by selecting a flag from a group of flags, each of the flags denoting a distinct batch execution characteristic.

The apparatus may further comprise an association module configured for associating a reference trend with an uncompleted batch execution, the reference trend being a trend data set collected from a completed batch execution; and a trend display module configured for displaying current trend data of the uncompleted batch execution and for selectably displaying the reference trend together with the current trend data.

The association module may be further configured for displaying a plurality of flagged completed batch executions for selection of a particular flagged completed batch execution therefrom for providing the reference trend.

The trend display module may be further configured for displaying a second reference trend together with the current trend data, the second reference trend being selected from a plurality of collected trend data sets.

For both aspects, the second level window may comprise a plurality of rows configured for single-row scrolling display using a scroll bar provided for the first level window. The second level window may be configured to display a predetermined maximum number of rows of second level elements at a time if the first level window is of limited size. The third level window may comprise a plurality of rows configured for single-row scrolling display using a scroll bar provided for the first level window. The third level window may be configured to display a predetermined maximum number of rows of third level elements at a time if the first level window is of limited size.

### Brief Description of the Drawings

In order that the present invention may be fully understood and readily put into practical effect, an embodiment of the invention will now be described by way of non-limitative example, the description being with reference to the accompanying illustrative drawings, in which:
Fig. 1 is an architecture diagram of an exemplary apparatus for displaying batch execution data of an industrial plant;
FIG. 2 is an exemplary screen capture of a display of a reference trend superimposed on current trend data;
FIG. 3 is a flowchart of an exemplary method for displaying batch execution data of an industrial plant;
FIG. 4 is an exemplary screen shot of flagged batch executions;
FIG. 5 is an exemplary screens shot of flagging a batch execution;
FIG. 6 is an exemplary screen shot of selecting a flagged completed batch execution for association of its collected trend data set as a reference trend with an uncompleted batch execution;
FIG. 7 is an exemplary screen shot of selecting a flagged completed batch execution for calling up its collected trend data set to be displayed as a second reference trend together with current trend data;
FIG. 8 is a procedural control model;
FIG. 9 is a flowchart of another exemplary method for displaying batch execution data of an industrial plant;
FIG. 10 is an architecture diagram of another exemplary apparatus for displaying batch execution data of an industrial plant;
FIG. 11 is an exemplary screen shot of displaying a second level window within a first level window;
FIG. 12 is an exemplary screen shot of displaying a third level window within the second level window of FIG. 11;
FIG. 13 is an exemplary screen shot of displaying a fourth level window within the third level window of FIG. 12;
FIG. 14 is an exemplary screen shot of displaying a further second level window within the first level window of FIG. 11;
FIG. 15 is an exemplary screen shot of displaying a marked level element;
FIG. 16 is an exemplary screen shot of level windows comprising a plurality of single-row scrollable rows and a level window displaying a maximum of five rows of level elements;
FIG. 17 is an exemplary screen shot of selecting a first level element for expansion in a first level window; and
FIG. 18 is an exemplary screen shot of moving the selected first level element to a top row of level elements in the first level window when displaying a second level window.

### Detailed Description of the Preferred Embodiments

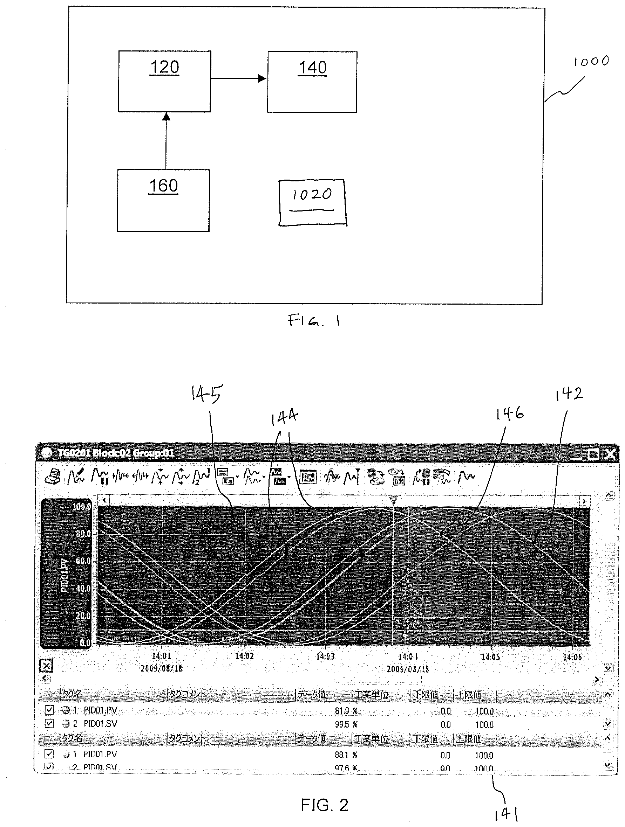

With reference to FIGS. 1 to 15, exemplary embodiments of a method and apparatus for displaying batch execution data of an industrial plant will now be described. Throughout this specification, the word "a" is not limited to mean "only one" and may mean "one or more".

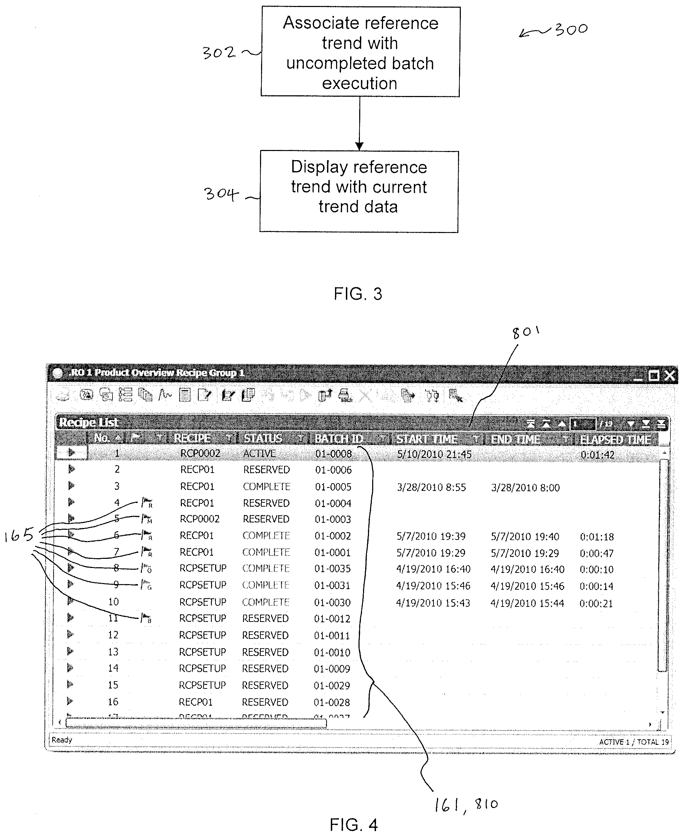

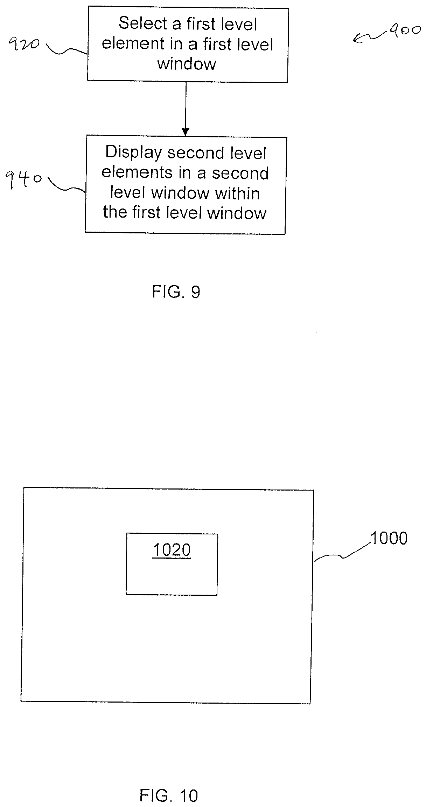

In a batch manufacturing plant, it is often desirable to monitor a number of batch executions 161 at once, as shown in the exemplary screen shot of FIG. 4. Each of the batch executions 161 shown in FIG. 4 is typically a first level element 810 or procedure 810 under procedural control as described with reference to FIG. 8 above. When checking subsequent level elements 820, 830, 840 for batch executions 810, in order to avoid the clutter and confusion of opening more and more new windows on top of each other as practiced in the prior art, a method 900 and apparatus 1000 as shown in FIGS. 9 and 10 are provided.

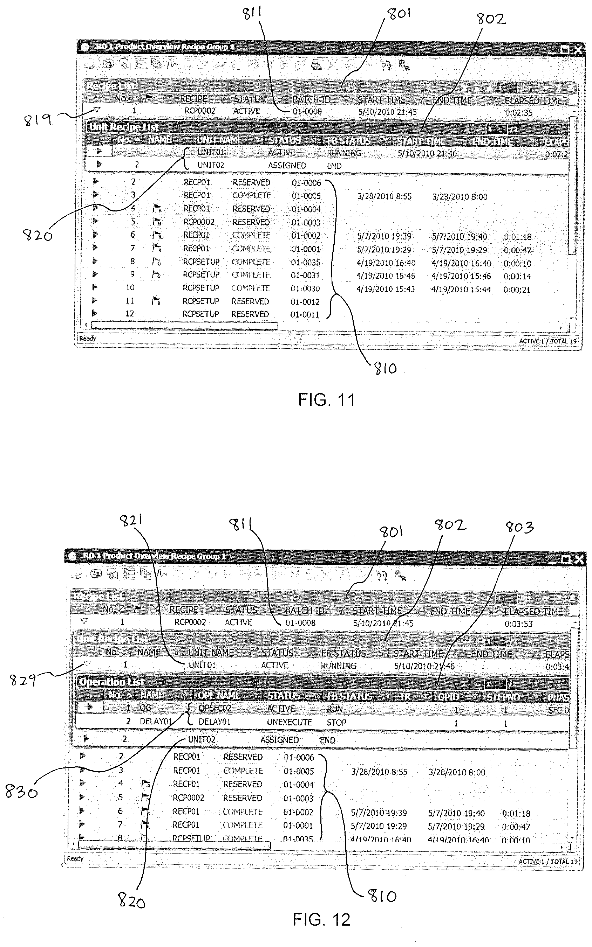

In the method 900, to check on a particular batch execution or first level element 811 that is shown in a first level window 801, as depicted in the exemplary screen shot of FIG. 11, a user selects the first level element 811 in the first level window 801, 920 in order to expand it. This may be done by clicking on a special icon 819 for the selected first level element 811, that is also provided for each first level element 810, such as a triangle 819 as shown. Before selection, the triangle 819 may point to the right. After selection, the triangle 819 may point down. A window display module 1020 of the apparatus 1000 is configured such that selecting the first level element 811, 920 leads to a subsequent or second level window 802 being displayed or opened within the first level window 801, 940 directly beneath the selected first level element 811, and without obscuring any other first level element 810 in the first level window 801, as shown in FIG. 11. This means that all the other first level elements 810 that were originally displayed under the selected first level element 811 in the first level window 801 are moved down in the first level window 801 to become displayed under the second level window 802, while remaining in the first level window 801. In this way, it is clear to a user that the second level elements 820 displayed in the second level window 802 are comprised by or "belong to" the selected first level element 811 and not any other first level element 810.

Similarly, the method 900 and apparatus 1000 allow a user to select a second level element 821 in the second level window 802 for expansion by clicking on its provided icon 829. Upon doing so, third level elements 830 comprised by the selected second level element 821 are displayed in a subsequent or third level window 803. The third level window 803 is displayed within the second level window 802, directly beneath the selected second level element 821, as shown in the exemplary screen shot in FIG. 12. In this way, it is clear to the user that the third level elements 830 belong to the selected second level element 821, which in turn belongs to the selected first level element 811.

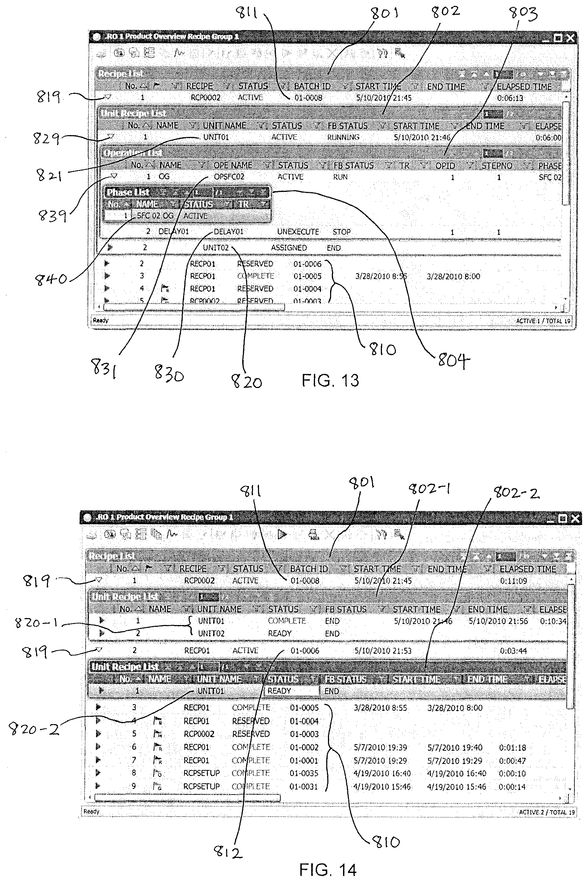

Fourth level elements 840 may similarly be displayed in a subsequent fourth level window 804, as shown in the exemplary screen shot in FIG. 13, when a third level element 831 in the third level window 803 is selected for expansion by clicking on its icon 839 that is provided for each third level element 830. Similarly, the fourth level window 804 is displayed within the third level window 803, directly beneath the selected third level element 831.

The method 900 and apparatus 1000 thus permit each subsequently opened level window 802, 803 or 804 to be displayed within its preceding level window, without obscuring other level elements in the preceding level window. This results in a progressive nest of windows being displayed whenever a user wishes to view each batch execution 811 in more detail by expanding subsequent level elements 811, 821, 831, for example as shown by the nest of level windows 801, 802, 803, 804 displayed in FIG. 13. By displaying each newly opened window within a previously opened one, clutter and confusion are avoided since it is clear to the user that each nest of windows is for only a particular batch execution 811.

The method 900 and apparatus 1000 are also configured to allow more than one level element for a same level to be displayed at any one time. For example, as shown in the exemplary screen shot of FIG. 14, two first level elements 811, 812 have been selected in the first level window 801. Accordingly, two corresponding second level windows 802-1, 802-2 are opened. Both second level windows 802-1, 802-2 are displayed within the first level window 801, each one 802-1, 802-2 directly beneath its respective selected first level element 811, 812. Similarly, multiple second, third, and fourth level elements 820, 830, 840 may be selected to open multiple second, third, and fourth level windows 802, 803, 804 respectively. Even so, the nesting of windows using the method 900 and apparatus 1000 allows the user to continue having an uncluttered and clear view of all the various level elements that are on display.

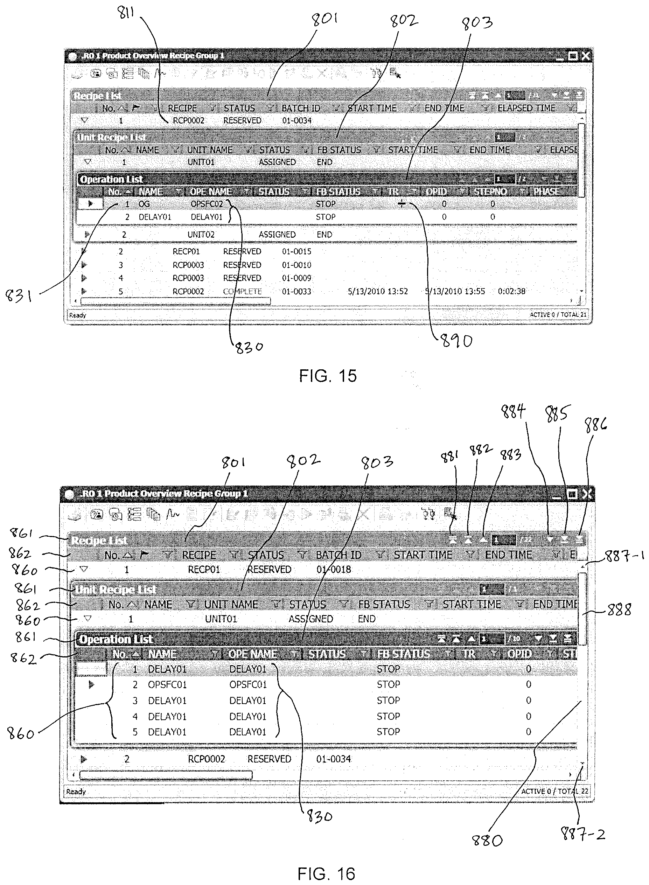

To facilitate ease of viewing for users, a scroll bar 880 may be provided for the first level window 801 in order to view all contents that are further down within the first level window 801, as shown in FIG. 16. It will be appreciated that contents within the first level window may include one or more subsequent level windows 802, 803, 804 if they have already been opened. Each of the level windows 801, 802, 803, 804 comprises a number of rows including a header row 861, a menu row 862 and one or more rows 860 of level elements. The level windows 801, 802, 803, 804 are configured such that single-row scrolling is permitted by use of the scroll bar 880, for example, when making single clicks of the single row scroll buttons 887-1, 887-2 on either end of the scroll bar 880 or dragging the scroll bar thumb 888. The level windows 801, 802, 803, 804 are therefore not configured as conventional single blocks of row detail where each block is treated as a single row such that the entire block of row detail is skipped when only clicking once on the down-scroll button 887-2. By configuring the level windows 801, 802, 803, 804 to allow single-row scrolling where each row 861, 862, 860 is recognized and treated as a discrete row, users are provided with a user-customizable display to show a selected range of specific rows 861, 862, 860 within the first level window 801.

Within subsequent level windows 802, 803, 804, preferably no scroll bar 880 is provided because this would undesirably reduce the display area of each subsequent level window 802, 803, 804 opened. Instead, scroll buttons 881 to 886 are preferably provided to still allow scrolling within each subsequent level window 802, 803, 804. Preferably, the scroll buttons 881 to 886 are configured to "jump to top" 881, "jump to bottom" 886, move a page up 882, move a page down 885, move one row up 883 and move one row down 884. By providing the scroll bar 880 only for the first level window 801 and scroll buttons 881 to 886 for the subsequent level windows 802, 803, 804, a user-friendly and intuitive interface that also maximizes display area is provided to users.

To further simplify the display of batch execution data, each subsequent level window 802, 803, or 804 that is currently active (for example the third level window 803 in FIG. 16) is preferably configured to display a predetermined maximum number of rows 860 of level elements at a time, if there are more than the predetermined maximum number of level elements 820, 830 or 840 respectively in that subsequent level window 802, 803, or 804, and available window space in the first level window 801 is limited. Remaining rows 860 of level elements other than the predetermined maximum number on display may be viewed by using appropriate ones of the provided scroll buttons 881 to 886. Such a configuration is especially useful where a limited display area is available, so that data presented in each subsequent level window 802, 803, or 804 is contained manageably, and a simpler visual effect is achieved to improve clarity for users. In the exemplary embodiment shown in FIG. 16, the predetermined maximum number of rows 860 to be displayed is five. Preferably, this number can be customized by the user.

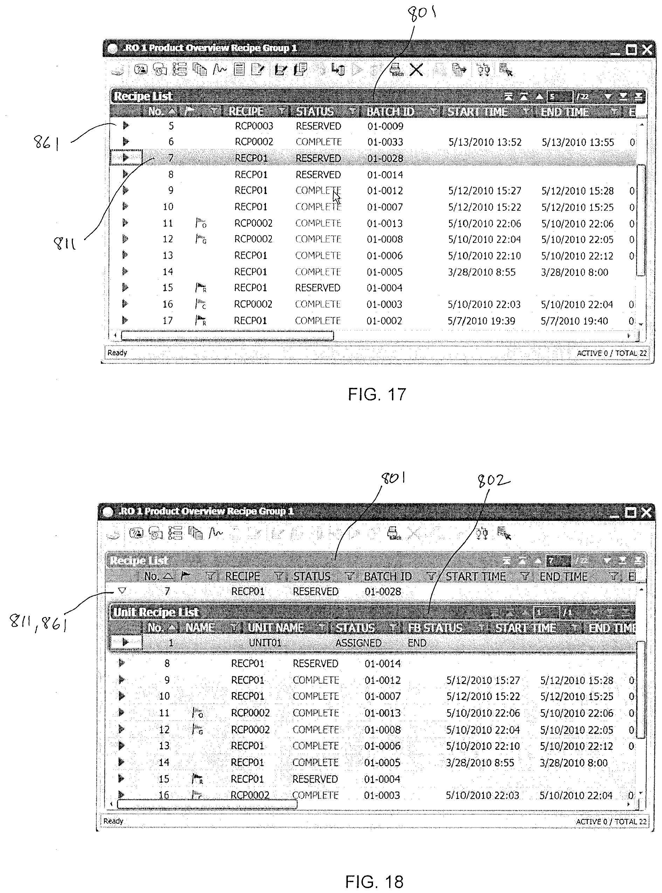

To further improve clarity for users, any currently selected first level element 811 in a first level window, as shown in FIG. 17, is moved to a top row 861 of first level elements 810 when expanded to display its corresponding second level window 802. The user thus always knows that the batch execution 811 in the top row 861 is always the one to which subsequent opened level windows 802, 803 or 804 belong, and is currently in active view. Moving a currently active expanded batch execution 811 to the top row 861 also creates more space below for displaying further expanded subsequent level windows 802, 803, 804 to minimize the need for scrolling up and down within windows in order to see areas of interest.

In addition to displaying the level windows in a progressively nested manner, the method 900 and apparatus 1000 may further be configured to display a particular level element as a marked level element. The marked level element is a procedural element at which the batch execution is currently transitioning. For example, as shown in the exemplary screen shot of FIG. 15, a particular third level element 830 has been displayed as a marked element 831 by displaying a mark 890 in the shape of a "+" for that element 831. This allows users to know that the batch execution 811 is currently transitioning at the marked third level element 831. Transitioning may mean that the batch execution 811 is processing at that marked level element 831, or that it has halted at that marked element 831. In either case, displaying the transition mark 890 at a particular level element informs users that the batch execution is currently processing or halted at the marked level element 831 and not anywhere else.

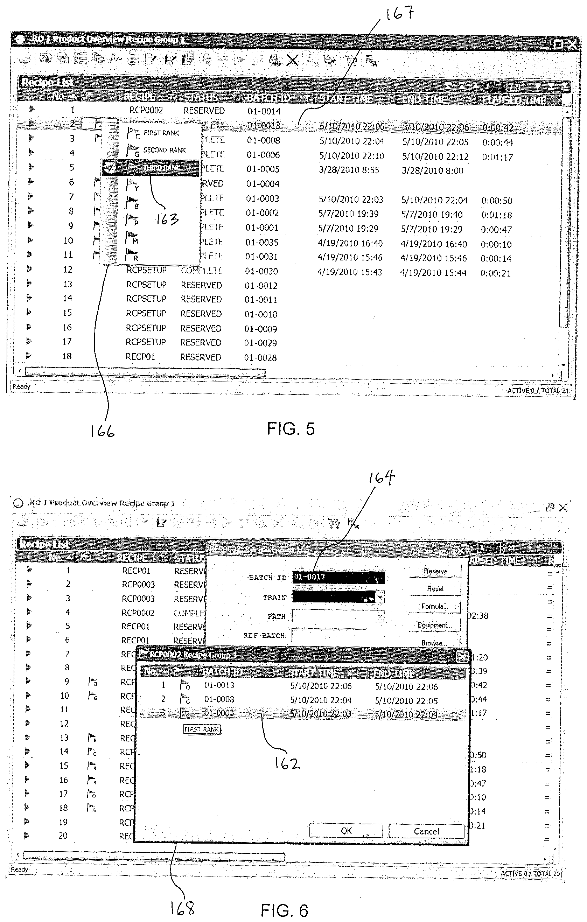

As shown in FIG. 1, the apparatus 1000 may further comprise a flag module 160 configured for flagging at least one batch execution 165 among a plurality of batch executions 161, as shown in the exemplary screen shot of FIG. 4. As shown in the exemplary screen shot of FIG. 5, flagging a batch execution 167 may be by selecting a flag 163 for that batch execution 167 from a group of flags in a drop-down menu 166. Each flag in the group 166 is differentiated to denote a distinct batch execution characteristic. For example, a red flag may be used to denote a batch execution with first ranked production results while a yellow flag may be used to denote a third ranked production result. By using the flag module 160 to flag certain batch executions 165, users can therefore readily tell the batch execution characteristic of each flagged batch execution by the color of its flag.

The apparatus 1000 may also comprise an association module 120 configured for associating a reference trend 142 with an uncompleted batch execution 302, in additional method steps 300 shown in FIG. 3. The reference trend 142 is associated for display together with current trend data 144 of the uncompleted batch execution 304 as shown in FIG. 2. A reference trend 142 is a trend data set that has been collected from a completed batch execution having certain characteristics. For example, a particular completed batch execution may have a desirable production quality that a user hopes to achieve for a subsequent uncompleted batch execution. Associating the reference trend 142 with the uncompleted batch execution links the reference trend 142 to the uncompleted batch execution so that when the uncompleted batch execution is being performed, the reference trend 142 may be readily accessed for comparison with current trend data 144 that is being collected from the uncompleted batch execution while it is being performed.

A trend display module 140 is provided to display the current trend data 144 so that a user may monitor how the uncompleted batch execution is performing. The trend display module 140 is also configured for selectably displaying the reference trend 142 together with displaying the current trend data 144. This may be done by superimposing the reference trend 142 on the current trend data 144, as shown in the exemplary screen shot 141 in FIG. 2. Because the reference trend 142 has already been associated with the uncompleted batch execution, the reference trend 142 may be readily displayed by a simple right-click of the mouse to call up the reference trend 142, and another right-click may remove the reference trend 142 from display. Alternatively, a dedicated on-screen button or icon may be provided for a user to click on in order to call up the reference trend 142 and display it together with the current trend data 144 in a same trend panel 145.

By displaying the reference trend 142 together with the current trend data 144, a user can attempt to match current trend data 144 to the reference trend 142 by adjusting appropriate production parameters of the uncompleted batch execution while it is being performed. In this way, the uncompleted batch execution that is being performed may achieve similar characteristics as the completed batch execution from which the reference trend 142 was obtained.

Where a flag module 160 is provided, a particular flagged completed batch execution 162 may be selected by a user for providing the reference trend 142 for association with an uncompleted batch execution 164. Accordingly, the association module 120 may be further configured to display a plurality of flagged completed batch executions 168 as shown in FIG. 6. In this way, when a user wants to associate a reference trend 142 with an uncompleted batch execution 164, the user may simply select a particular flagged completed batch execution 162 from the plurality of flagged completed batch executions 168. The trend data set collected from the selected flagged completed batch execution 162 will thus be associated with the uncompleted batch execution 164 as its reference trend 142. As mentioned above, once the reference trend 142 has been associated with the uncompleted batch execution 164, displaying the reference trend 142 becomes a simple matter of a right click or clicking a dedicated icon on the trend panel 145.

In addition to selectably displaying the reference trend 142 together with the current trend data 144, 304, the trend display module 140 may also be configured to display a second reference trend 146 together with the current trend data 144. Unlike the reference trend 142 which has already been associated with the uncompleted batch execution, the second reference trend 146 is a second trend data set collected from a second completed batch execution 176 which has not been associated with the uncompleted batch execution. This configuration of the trend display module 140 is to allow users to call up ad-hoc reference trends for comparison with the current trend data 144 if need be. To do so, as shown in FIG. 7, the second reference trend 146 is obtained from a second completed batch execution 176 that is manually selected from a plurality of collected trend data sets 178. Unlike the associated reference trend 142, a simple right click to display the second reference trend 146 is not available because the second reference trend 146 has not been associated with the uncompleted batch execution 174. By allowing users to call up an ad-hoc reference trend 146 for comparison with the current trend data 144 besides the associated reference trend 142, more improvement may be made to the batch process.

Whilst there has been described in the foregoing description preferred embodiments of the present invention, it will be understood by those skilled in the technology concerned that many variations or modifications in details of design or construction may be made without departing from the present invention.

## Claims

1. A method of displaying batch execution data of an industrial plant configured for performing a plurality of batch executions, each batch execution comprising a hierarchy of levels of elements, each level comprising at least one level element, the method comprising:
selecting a first level element in a first level window, the first level window displaying data for each first level element; and
displaying in a second level window second level elements comprised by the selected first level element, the second level window displaying data for each of the displayed second level elements, the second level window being displayed within the first level window directly beneath the selected first level element such that all other first level elements originally displayed under the selected first level element are moved down in the first level window to become displayed under the second level window while remaining in the first level window;
the method further comprising
flagging at least one completed batch execution among a plurality of completed batch executions by selecting a flag from a group of flags, each of the flags denoting a distinct batch execution characteristic,
associating a reference trend with an uncompleted batch execution, the reference trend being a trend data set collected from a completed batch execution; and
selectably displaying the reference trend together with displaying the current trend data of the uncompleted batch execution;
wherein associating the reference trend with the uncompleted batch execution comprises selecting a particular flagged completed batch execution, and selecting a second trend data set as a second reference trend; and
displaying the second reference trend together with displaying the current trend data.

2. The method of claim 1, further comprising selecting another first level element displayed in the first level window; and displaying in another second level window second level elements comprised by the another first level element, the another second level window being displayed within the first level window directly beneath the another first level element such that all other first level elements originally displayed under the selected first level element are displayed under the second level window while remaining in the first level window,, and/or wherein the second level window comprises a plurality of rows configured for single-row scrolling display using a scroll bar provided for the first level window, and/or wherein the second level window is configured to display a predetermined maximum number of rows of second level elements at a time if the first level window is of limited size.

3. The method of claim 1 or 2, further comprising selecting a second level element in the second level window and displaying in a third level window third level elements comprised by the selected second level element, the third level window displaying data for each of the displayed third level elements, the third level window being displayed within the second level window directly beneath the selected second level element such that all other second level elements originally displayed under the selected second level element are displayed under the third level window while remaining in the second level window.

4. The method of claim 3, further comprising selecting another second level element in the second level window; and
displaying in another third level window third level elements comprised by the another second level element, the another third level window being displayed within the second level window directly beneath the another second level such that all other second level elements originally displayed under the selected second level element are displayed under the third level window while remaining in the second level window, and/or wherein the third level window comprises a plurality of rows configured for single-row scrolling display using a scroll bar provided for the first level window, and/or wherein the third level window is configured to display a predetermined maximum number of rows of third level elements at a time if the first level window is of limited size.

5. The method of any one of the preceding claims, further comprising displaying the selected first level element in a topmost row of first level elements in the first level window when displaying the second level window, and/or further comprising displaying a particular level element as a marked level element, the marked level element being a procedural element at which the batch execution is currently transitioning.

6. The method of claim 1, further comprising displaying a plurality of flagged completed batch executions for selection of the particular flagged completed batch execution therefrom.

7. An apparatus for displaying batch execution data of an industrial plant configured for performing a plurality of batch executions, each batch execution comprising a hierarchy of levels of elements, each level comprising at least one level element, the apparatus comprising:
a window display module configured for displaying at least one second level window within a first level window, the first level window displaying data for each first level element, such that upon selection of a first level element in the first level window, a corresponding second level window is displayed within the first level window directly beneath its corresponding first level element such that all other first level elements originally displayed under the selected first level element are moved down in the first level window to become displayed under the second level window while remaining in the first level window, each second level window displaying second level elements comprised by its corresponding first level element and displaying data for each of the displayed second level elements;
a flag module configured for flagging at least one completed batch execution among a plurality of completed batch executions by selecting a flag from a group of flags, each of the flags denoting a distinct batch execution characteristic;
an association module configured for associating a reference trend with an uncompleted batch execution, the reference trend being a trend data set collected from a completed batch execution; and
a trend display module configured for displaying current trend data of the uncompleted batch execution and for selectably displaying the reference trend together with the current trend data;
wherein the association module is further configured for displaying a plurality of flagged completed batch executions for selection of a particular flagged completed batch execution therefrom for providing the reference trend, and
wherein the trend display module is further configured for displaying a second reference trend together with the current trend data, the second reference trend being selected from a plurality of collected trend data sets.

8. The apparatus of claim 7, wherein the second level window comprises a plurality of rows configured for single-row scrolling display using a scroll bar provided for the first level window, and/or wherein the second level window is configured to display a predetermined maximum number of rows of second level elements at a time if the first level window is of limited size, and/or wherein the window display module is further configured to display the selected first level element in a topmost row of first level elements in the first level window when the second level window is displayed, and/or wherein the window display module is further configured to display a particular level element as a marked level element, the marked level element being a procedural element at which the batch execution is currently transitioning.

9. The apparatus of claim 7 or 8, wherein the window display module is further configured for displaying at least one third level window within a second level window, such that upon selection of second level element in the second level window, a corresponding third level window is displayed within the second level window directly beneath its corresponding second level element such that all other second level elements originally displayed under the selected second level element are displayed under the third level window while remaining in the second level window, each third level window displaying third level elements comprised by its corresponding second level element.

10. The apparatus of claim 9, wherein the third level window comprises a plurality of rows configured for single-row scrolling display using a scroll bar provided for the first level window, and/or wherein the third level window is configured to display a predetermined maximum number of rows of third level elements at a time if the first level window is of limited size.

## Patentansprüche

1. Verfahren zum Anzeigen von Chargenausführungsdaten einer Industrieanlage, die zum Durchführen einer Vielzahl von Chargenausführungen konfiguriert ist, wobei jede Chargenausführung eine Hierarchie von Ebenen von Elementen aufweist, wobei jede Ebene zumindest ein Ebenenelement aufweist, wobei das Verfahren aufweist:
Auswählen eines Erste-Ebene-Elements in einem Erste-Ebene-Fenster, wobei das Erste-Ebene-Fenster für jedes Erste-Ebene-Element Daten anzeigt; und
Anzeigen in einem Zweite-Ebene-Fenster von Zweite-Ebene-Elementen, die durch das ausgewählte Erste-Ebene-Element umfasst sind, wobei das Zweite-Ebene-Fenster für jedes der angezeigten Zweite-Ebene-Elemente Daten anzeigt, wobei das Zweite-Ebene-Fenster innerhalb des Erste-Ebene-Fensters direkt unter dem ausgewählten Erste-Ebene-Element derart angezeigt wird, dass alle anderen ursprünglich unter dem ausgewählten Erste-Ebene-Element angezeigten Erste-Ebene-Elemente in dem Erste-Ebene-Fenster nach unten bewegt werden, um unter dem Zweite-Ebene-Fenster angezeigt zu werden, während sie in dem Erste-Ebene-Fenster verbleiben;
wobei das Verfahren ferner aufweist:
Kennzeichnen von zumindest einer abgeschlossenen Chargenausführung unter einer Vielzahl von abgeschlossenen Chargenausführungen durch Auswählen eines Flags aus einer Gruppe von Flags, wobei jedes der Flags eine eindeutige Chargenausführungseigenschaft bezeichnet,
Assoziieren eines Bezugsverlaufs mit einer nicht abgeschlossenen Chargenausführung, wobei der Bezugsverlauf ein von einer abgeschlossenen Chargenausführung gesammelter Verlaufsdatensatz ist; und
Ausgewähltes Anzeigen des Bezugsverlaufs zusammen mit einem Anzeigen der gegenwärtigen Verlaufsdaten der nicht abgeschlossenen Chargenausführung;
wobei ein Assoziieren des Bezugsverlaufs mit der nicht abgeschlossenen Chargenausführung ein Auswählen einer bestimmten gekennzeichneten und abgeschlossenen Chargenausführung sowie ein Auswählen eines zweiten Verlaufsdatensatzes als einen zweiten Bezugsverlauf aufweist; und
Anzeigen des zweiten Bezugsverlaufs zusammen mit einem Anzeigen der gegenwärtigen Verlaufsdaten.

2. Verfahren nach Anspruch 1, ferner mit einem Auswählen eines anderen in dem Erste-Ebene-Fenster angezeigten Erste-Ebene-Elements; und einem Anzeigen in einem anderen Zweite-Ebene-Fenster von durch das andere Erste-Ebene-Element umfassten Zweite-Ebene-Elementen, wobei das andere Zweite-Ebene-Fenster innerhalb des Erste-Ebene-Fensters direkt unter dem anderen Erste-Ebene-Element derart angezeigt wird, dass alle anderen ursprünglich unter dem ausgewählten Erste-Ebene-Element angezeigten Erste-Ebene-Elemente unter dem Zweite-Ebene-Fenster angezeigt werden, während sie in dem Erste-Ebene-Fenster verbleiben, und/oder wobei das Zweite-Ebene-Fenster eine Vielzahl von Zeilen aufweist, die für eine Einzelzeilenrollanzeige unter Verwendung eines für das Erste-Ebene-Fenster vorgesehenen Rollbalkens konfiguriert ist, und/oder wobei das Zweite-Ebene-Fenster konfiguriert ist, um eine vorbestimmte Maximalanzahl von Zeilen von Zweite-Ebene-Elementen zu einem Zeitpunkt anzuzeigen, falls das Erste-Ebene-Fenster eine begrenzte Größe aufweist.

3. Verfahren nach Anspruch 1 oder 2, ferner mit einem Auswählen eines Zweite-Ebene-Elements in dem Zweite-Ebene-Fenster, und einem Anzeigen in einem Dritte-Ebene-Fenster von durch das ausgewählte Zweite-Ebene-Element umfassten Dritte-Ebene-Elementen, wobei das Dritte-Ebene-Fenster für jedes der angezeigten Dritte-Ebene-Elementen Daten anzeigt, wobei das Dritte-Ebene-Fenster innerhalb des Zweite-Ebene-Fensters direkt unter dem ausgewählten Zweite-Ebene-Element derart angezeigt wird, dass alle anderen ursprünglich unter dem ausgewählten Zweite-Ebene-Element angezeigten Zweite-Ebene-Elemente unter dem Dritte-Ebene-Fenster angezeigt werden, während sie in dem Zweite-Ebene-Fenster verbleiben.

4. Verfahren nach Anspruch 3, ferner mit einem Auswählen eines anderen Zweite-Ebene-Elements in dem Zweite-Ebene-Fenster; und
Anzeigen in einem anderen Dritte-Ebene-Fenster von durch das andere Zweite-Ebene-Element umfassten Dritte-Ebene-Elementen, wobei das andere Dritte-Ebene-Fenster innerhalb des Zweite-Ebene-Fensters direkt unter der anderen zweiten Ebene derart angezeigt wird, dass alle anderen ursprünglich unter dem ausgewählten Zweite-Ebene-Element angezeigten Zweite-Ebene-Elemente unter dem Dritte-Ebene-Fenster angezeigt werden, während sie in dem Zweite-Ebene-Fenster verbleiben, und/oder wobei das Dritte-Ebene-Fenster eine Vielzahl von Zeilen aufweist, die für eine Einzelzeilenrollanzeige unter Verwendung eines für das Erste-Ebene-Fenster vorgesehenen Rollbalkens konfiguriert ist, und/oder wobei das Dritte-Ebene-Fenster konfiguriert ist, um eine vorbestimmte Maximalanzahl von Zeilen von Dritte-Ebene-Elementen zu einem Zeitpunkt anzuzeigen, falls das Erste-Ebene-Fenster eine begrenzte Größe aufweist.

5. Verfahren nach einem der vorangehenden Ansprüche, ferner mit einem Anzeigen des ausgewählten Erste-Ebene-Elements in einer obersten Zeile von Erste-Ebene-Elementen in dem Erste-Ebene-Fenster, wenn das Zweite-Ebene-Fenster angezeigt wird, und/oder ferner mit einem Anzeigen eines bestimmten Ebenenelements als ein markiertes Ebenenelement, wobei das markierte Ebenenelement ein prozedurales Element ist, bei welchem die Chargenausführung gegenwärtig übergeht.

6. Verfahren nach Anspruch 1, ferner mit einem Anzeigen einer Vielzahl von gekennzeichneten und abgeschlossenen Chargenausführungen zum Auswählen der bestimmten gekennzeichneten und abgeschlossenen Chargenausführung daraus.

7. Vorrichtung zum Anzeigen von Chargenausführungsdaten einer Industrieanlage, die zum Durchführen einer Vielzahl von Chargenausführungen konfiguriert ist, wobei jede Chargenausführung eine Hierarchie von Ebenen von Elementen aufweist, wobei jede Ebene zumindest ein Ebenenelement aufweist, und wobei die Vorrichtung aufweist:
ein Fensteranzeigemodul, das zum Anzeigen von zumindest einem Zweite-Ebene-Fenster innerhalb eines Erste-Ebene-Fensters konfiguriert ist, wobei das Erste-Ebene-Fenster für jedes Erste-Ebene-Element Daten derart anzeigt, dass auf eine Auswahl eines Erste-Ebene-Elements in dem Erste-Ebene-Fenster hin, ein korrespondierendes Zweite-Ebene-Fenster innerhalb des Erste-Ebene-Fensters direkt unter seinem korrespondierenden Erste-Ebene-Element derart angezeigt wird, dass alle anderen ursprünglich unter dem ausgewählten Erste-Ebene-Element angezeigten Erste-Ebene-Elemente in dem Erste-Ebene-Fenster nach unten bewegt werden, um unter dem Zweite-Ebene-Fenster angezeigt zu werden, während sie in dem Erste-Ebene-Fenster verbleiben, wobei jedes Zweite-Ebene-Fenster durch sein korrespondierendes Erste-Ebene-Element umfasste Zweite-Ebene-Elemente anzeigt, sowie für jedes der angezeigten Zweite-Ebene-Elemente Daten anzeigt;
ein Flagmodul, das zum Kennzeichnen von zumindest einer abgeschlossenen Chargenausführung unter einer Vielzahl von abgeschlossenen Chargenausführungen durch Auswählen eines Flags aus einer Gruppe von Flags konfiguriert ist, wobei jedes der Flags eine eindeutige Chargenausführungseigenschaft bezeichnet;
ein Assoziationsmodul, das zum Assoziieren eines Bezugsverlaufs mit einer nicht abgeschlossenen Chargenausführung konfiguriert ist, wobei der Bezugsverlauf ein von einer abgeschlossenen Chargenausführung gesammelter Verlaufsdatensatz ist; und
ein Verlaufsanzeigemodul, das zum Anzeigen von gegenwärtigen Verlaufsdaten der nicht abgeschlossenen Chargenausführung und zum ausgewählten Anzeigen des Bezugsverlaufs zusammen mit den gegenwärtigen Verlaufsdaten konfiguriert ist;
wobei das Assoziationsmodul ferner zum Anzeigen einer Vielzahl von gekennzeichneten und abgeschlossenen Chargenausführungen zum Auswählen aus einer bestimmten gekennzeichneten und abgeschlossenen Chargenausführung daraus konfiguriert ist, um den Bezugsverlauf bereitzustellen, und
wobei das Verlaufsanzeigemodul ferner zum Anzeigen eines zweiten Bezugsverlaufs zusammen mit den gegenwärtigen Verlaufsdaten konfiguriert ist, wobei der zweite Bezugsverlauf aus einer Vielzahl von gesammelten Verlaufsdatensätzen ausgewählt ist.

8. Vorrichtung nach Anspruch 7, wobei das Zweite-Ebene-Fenster eine Vielzahl von Zeilen aufweist, die für eine Einzelzeilenrollanzeige unter Verwendung eines für das Erste-Ebene-Fenster vorgesehenen Rollbalkens konfiguriert ist, und/oder wobei das Zweite-Ebene-Fenster konfiguriert ist, um eine vorbestimmte Maximalanzahl von Zeilen von Zweite-Ebene-Elementen zu einem Zeitpunkt anzuzeigen, falls das Erste-Ebene-Fenster eine begrenzte Größe aufweist, und/oder wobei das Fensteranzeigemodul ferner konfiguriert ist, um das ausgewählte Erste-Ebene-Element in einer obersten Zeile von Erste-Ebene-Elementen in dem Erste-Ebene-Fenster anzuzeigen, wenn das Zweite-Ebene-Fenster angezeigt wird, und/oder wobei das Fensteranzeigemodul ferner konfiguriert ist, um ein bestimmtes Ebenenelement als ein markiertes Ebenenelement anzuzeigen, wobei das markierte Ebenenelement ein prozedurales Element ist, bei welchem die Chargenausführung gegenwärtig übergeht.

9. Vorrichtung nach Anspruch 7 oder 8, wobei das Fensteranzeigemodul ferner zum Anzeigen von zumindest einem Dritte-Ebene-Fenster innerhalb eines Zweite-Ebene-Fensters derart konfiguriert ist, dass auf ein Auswählen eines Zweite-Ebene-Elements in dem Zweite-Ebene-Fenster hin, ein korrespondierendes Dritte-Ebene-Fenster innerhalb des Zweite-Ebene-Fensters direkt unter seinem korrespondierenden Zweite-Ebene-Element derart angezeigt wird, dass alle anderen ursprünglich unter dem ausgewählten Zweite-Ebene-Element angezeigten Zweite-Ebene-Elemente unter dem Dritte-Ebene-Fenster angezeigt werden, während sie in dem Zweite-Ebene-Fenster verbleiben, wobei jedes Dritte-Ebene-Fenster durch sein korrespondierendes Zweite-Ebene-Element umfasste Dritte-Ebene-Elemente anzeigt.

10. Vorrichtung nach Anspruch 9, wobei das Dritte-Ebene-Fenster eine Vielzahl von Zeilen aufweist, die für eine Einzelzeilenrollanzeige unter Verwendung eines für das Erste-Ebene-Fenster vorgesehenen Rollbalkens konfiguriert ist, und/oder wobei das Dritte-Ebene-Fenster konfiguriert ist, um eine vorbestimmte Maximalanzahl von Zeilen von Dritte-Ebene-Elementen zu einem Zeitpunkt anzuzeigen, falls das Erste-Ebene-Fenster eine begrenzte Größe aufweist.

## Revendications

1. Procédé d'affichage de données d'exécution en lots d'une installation industrielle, configuré pour réaliser une pluralité d'exécutions en lots, chaque exécution en lots comprenant une hiérarchie de niveaux d'éléments, chaque niveau comprenant au moins un élément de niveau, le procédé comprenant :
la sélection d'un premier élément de niveau dans une première fenêtre de niveau, la première fenêtre de niveau affichant des données pour chaque premier élément de niveau ; et
l'affichage dans une deuxième fenêtre de niveau de deuxièmes éléments de niveau compris par le premier élément de niveau sélectionné, la deuxième fenêtre de niveau affichant des données pour chacun des deuxièmes éléments de niveau affichés, la deuxième fenêtre de niveau étant affichée à l'intérieur de la première fenêtre de niveau directement en dessous du premier élément de niveau sélectionné de sorte que tous les autres premiers éléments de niveau affichés à l'origine sous le premier élément de niveau sélectionné sont déplacés vers le bas dans la première fenêtre de niveau pour devenir affichés sous la deuxième fenêtre de niveau tandis qu'ils restent dans la première fenêtre de niveau ;
le procédé comprend en outre
le balisage d'au moins une exécution en lots accomplie parmi une pluralité d'exécutions en lots accomplies par la sélection d'une balise parmi un groupe de balises, chacune des balises dénotant une caractéristique d'exécution en lots distincte,
l'association d'une tendance de référence à une exécution en lots non accomplie, la tendance de référence étant un ensemble de données de tendance collecté à partir d'une exécution en lots accomplie ; et
l'affichage sélectif de la tendance de référence conjointement avec l'affichage des données de tendance actuelles de l'exécution en lots non accomplie ;
dans lequel l'association de la tendance de référence à l'exécution en lots non accomplie comprend la sélection d'une exécution en lots accomplie balisée particulière et la sélection d'un second ensemble de données de tendance en tant que seconde tendance de référence ; et
l'affichage de la seconde tendance de référence conjointement avec les données de tendance actuelles.

2. Procédé selon la revendication 1, comprenant en outre la sélection d'un autre premier élément de niveau affiché dans la première fenêtre de niveau ; et l'affichage dans une autre deuxième fenêtre de niveau de deuxièmes éléments de niveau compris par l'autre premier élément de niveau, l'autre deuxième fenêtre de niveau étant affichée à l'intérieur de la première fenêtre de niveau directement en dessous de l'autre premier élément de niveau de sorte que tous les autres premiers éléments de niveau affichés à l'origine sous le premier élément de niveau sélectionné sont affichés sous la deuxième fenêtre de niveau tandis qu'ils restent dans la première fenêtre de niveau, et/ou dans lequel la deuxième fenêtre de niveau comprend une pluralité de rangées configurées pour un affichage à défilement d'une seule rangée à l'aide d'une barre de défilement fournie à la première fenêtre de niveau, et/ou dans lequel la deuxième fenêtre de niveau est configurée pour afficher un nombre maximal prédéterminé de rangées de deuxièmes éléments de niveau un à la fois si la première fenêtre de niveau est de taille limitée.

3. Procédé selon la revendication 1 ou 2, comprenant en outre la sélection d'un deuxième élément de niveau dans la deuxième fenêtre de niveau et l'affichage dans une troisième fenêtre de niveau de troisièmes éléments de niveau compris par le deuxième élément de niveau sélectionné, la troisième fenêtre de niveau affichant des données pour chacun des troisièmes éléments de niveau affichés, la troisième fenêtre de niveau étant affichée à l'intérieur de la deuxième fenêtre de niveau directement en dessous du deuxième élément de niveau sélectionné de sorte que tous les autres deuxièmes éléments de niveau affichés à l'origine sous le deuxième élément de niveau sélectionné sont affichés sous la troisième fenêtre de niveau tandis qu'ils restent dans la deuxième fenêtre de niveau.

4. Procédé selon la revendication 3, comprenant en outre la sélection d'un autre deuxième élément de niveau dans la deuxième fenêtre de niveau ; et
l'affichage dans une autre troisième fenêtre de niveau de troisièmes éléments de niveau compris par l'autre deuxième élément de niveau, l'autre troisième fenêtre de niveau étant affichée à l'intérieur de la deuxième fenêtre de niveau directement en dessous de l'autre second niveau de sorte que tous les autres deuxièmes éléments de niveau affichés à l'origine sous le deuxième élément de niveau sélectionné sont affichés sous la troisième fenêtre de niveau tandis qu'ils restent dans la deuxième fenêtre de niveau, et/ou dans lequel la troisième fenêtre de niveau comprend une pluralité de rangées configurées pour un affichage à défilement d'une seule rangée à l'aide d'une barre de défilement fournie à la première fenêtre de niveau, et/ou dans lequel la troisième fenêtre de niveau est configurée pour afficher un nombre maximal prédéterminé de rangées de troisièmes éléments de niveau un à la fois si la première fenêtre de niveau est de taille limitée.

5. Procédé selon l'une quelconque des revendications précédentes, comprenant en outre l'affichage du premier élément de niveau sélectionné dans une rangée la plus haute de premiers éléments de niveau dans la première fenêtre de niveau lors de l'affichage de la deuxième fenêtre d'affichage, et/ou comprenant en outre l'affichage d'un élément de niveau particulier en tant qu'élément de niveau marqué, l'élément de niveau marqué étant un élément procédural au niveau duquel l'exécution en lots est actuellement en cours de transition.

6. Procédé selon la revendication 1, comprenant en outre l'affichage d'une pluralité d'exécutions en lots accomplies balisées pour la sélection de l'exécution en lots accomplie balisée particulière parmi celles-ci.

7. Appareil d'affichage de données d'exécution en lots d'une installation industrielle, configuré pour réaliser une pluralité d'exécutions en lots, chaque exécution en lots comprenant une hiérarchie de niveaux d'éléments, chaque niveau comprenant au moins un élément de niveau, l'appareil comprenant :
un module d'affichage de fenêtre configuré pour afficher au moins une deuxième fenêtre de niveau à l'intérieur d'une première fenêtre de niveau, la première fenêtre de niveau affichant des données pour chaque premier élément de niveau, de sorte que, lors de la sélection d'un premier élément de niveau dans la première fenêtre de niveau, une deuxième fenêtre de niveau correspondante est affichée à l'intérieur de la première fenêtre de niveau directement en dessous de son premier élément de niveau correspondant de sorte que tous les autres premiers éléments de niveau affichés à l'origine sous le premier élément de niveau sélectionné sont déplacés vers le bas dans la première fenêtre de niveau pour devenir affichés sous la deuxième fenêtre de niveau tandis qu'ils restent dans la première fenêtre de niveau, chaque deuxième fenêtre de niveau affichant des deuxièmes éléments de niveau compris par son premier élément de niveau correspondant et affichant des données pour un lot des deuxièmes éléments de niveau affichés ;
un module de balise configuré pour baliser au moins une exécution en lots accomplie parmi une pluralité d'exécutions en lots accomplies par la sélection d'une balise parmi un groupe de balises, chacune des balises dénotant une caractéristique d'exécution en lots distincte ;
un module d'association configuré pour associer une tendance de référence à une exécution en lots non accomplie, la tendance de référence étant un ensemble de données de tendance collecté à partir d'une exécution en lots accomplie ; et
un module d'affichage de tendance configuré pour afficher des données de tendance actuelles de l'exécution en lots non accomplie et pour afficher sélectivement la tendance de référence conjointement avec les données de tendance actuelles ;
dans lequel le module d'association est en outre configuré pour afficher une pluralité d'exécutions en lots accomplies balisées aux fins de sélection d'une exécution en lots accomplie balisée particulière parmi celles-ci pour fournir la tendance de référence, et
dans lequel le module d'affichage de tendance est en outre configuré pour afficher une seconde tendance de référence conjointement avec les données de tendance actuelles, la seconde tendance de référence étant sélectionnée parmi une pluralité d'ensembles de données de tendance collectés.

8. Appareil selon la revendication 7, dans lequel la deuxième fenêtre de niveau comprend une pluralité de rangées configurées pour un affichage à défilement d'une seule rangée à l'aide d'une barre de défilement fournie à la première fenêtre de niveau, et/ou dans lequel la deuxième fenêtre de niveau est configurée pour afficher un nombre maximal prédéterminé de rangées de deuxièmes éléments de niveau un à la fois si la première fenêtre de niveau est de taille limitée, et/ou dans lequel le module d'affichage de fenêtre est en outre configuré pour afficher le premier élément de niveau sélectionné dans une rangée la plus haute de premiers éléments de niveau dans la première fenêtre de niveau lorsque la deuxième fenêtre de niveau est affichée, et/ou dans lequel le module d'affichage de fenêtre est en outre configuré pour afficher un élément de niveau particulier en tant qu'élément de niveau marqué, l'élément de niveau marqué étant un élément procédural au niveau duquel l'exécution en lots est actuellement en cours de transition.

9. Appareil selon la revendication 7 ou 8, dans lequel le module d'affichage de fenêtre est en outre configuré pour afficher au moins une troisième fenêtre de niveau à l'intérieur d'une deuxième fenêtre de niveau, de sorte, lors de la sélection du deuxième élément de niveau dans la deuxième fenêtre de niveau, une troisième fenêtre de niveau correspondante est affichée à l'intérieur de la deuxième fenêtre de niveau directement en dessous de son deuxième élément de niveau correspondant de sorte que tous les autres deuxièmes éléments de niveau affichés à l'origine sous le deuxième élément de niveau sélectionné sont affichés sous la troisième fenêtre de niveau tandis qu'ils restent dans la deuxième fenêtre de niveau, chaque troisième fenêtre de niveau affichant des troisièmes éléments de niveau compris par leur deuxième élément de niveau correspondant.

10. Appareil selon la revendication 9, dans lequel la troisième fenêtre de niveau comprend une pluralité de rangées configurées pour un affichage à défilement d'une seule rangée à l'aide d'une barre de défilement fournie à la première fenêtre de niveau, et/ou dans lequel la troisième fenêtre de niveau est configurée pour afficher un nombre maximal prédéterminé de rangées de troisièmes éléments de niveau un à la fois si la première fenêtre de niveau est de taille limitée.
